# EUROPEAN PATENT APPLICATION

(11) **EP 2 720 136 A1**
(43) Date of publication of application: **16.04.2014**
(21) Application number: 12863861.6
(22) Date of filing: 28.12.2012
(51) Int. Cl.: G06F 3/12

(54) **DISTRIBUTED DIGITAL INKJET PRINTING METHOD AND SYSTEM SUPPORTING VARIABLE DATA**

(30) Priority: 30.12.2011 CN 201110457674
(71) Applicant: Peking University Founder Group Co., Ltd, Haidian District Beijing 100871 (CN); Peking University, Beijing 100871 (CN); Beijing Founder Electronics Co., Ltd., Haidian District, Beijing 100085 (CN)
(72) Inventor: XING, Xiaoxiao, Beijing 100871 (CN); HUANG, Weiping, Beijing 100871 (CN); LI, Linyi, Beijing 100871 (CN); YIN, Cuiran, Beijing 100871 (CN)
(74) Representative: Pfenning, Meinig & Partner GbR
(86) International application number: PCT/CN2012/087901
(87) International publication number: WO 2013/097779

(57) **Abstract**

Disclosed are a distributed digital inkjet printing method and system supporting variable data. A colour surface controller is configured for each print colour surface to increase the data transmission and computation speed of a hardware control module of each colour surface; and in addition, a server conducts RIP computation and transmits the computed page data of each colour surface to each colour surface controller. By using the method, the data transmission amount and the data amount read from a hard disk can be effectively reduced, and the computation efficiency can be increased, thereby increasing the printing speed of digital printers

## Description

This application claims priority to China Patent application No. 201110457674.0, filed with the China Patent Office on December 30, 2011, entitled "Distributed Digital Inkjet Printing Method and System Supporting Variable Data", which is incorporated herein by reference in its entirety.

### Field of the Invention

The present invention belongs to the technical field of digital printing, and particularly relates to a distributed digital inkjet printing method and system supporting variable data.

### Background of the Invention

Digital printing, a printing technology developing rapidly in recent years, is featured by direct transmission, processing and printing of data. Namely, imaging data is input in one step, and direct imaging is accomplished by an imaging component controlled by a control system. For common digital printing equipment with the function of on-demand inkjet printing, under the control of the control system, piezoelectric crystals in a nozzle of the imaging component generate pulses to squeeze ink out when the surface of a substrate body (e.g. paper) reaches a predetermined position, and misty ink drops are directly jet onto the surface of the printing substrate (e.g. paper) for imaging.

It is required in digital printing technology that a raster image processor (RIP) rasterizes the print file (e.g. PostScript or PDF file) to generate rasterization lattices that can be used by the nozzle for printing. In a color digital printer, it is further required that a plurality of rasterization lattices with different panes are further calculated by the RIP, and these lattices are transmitted to pane control modules for various panes, so that printing of the various panes can be achieved. Rasterization over every page of the printed file is necessary, and corresponding print lattices are generated.

A major problem for the digital printing technology is that the printing speed needs to be improved continuously. There are plenty of factors imposing restrictions on the printing speed of digital printers, including the processing speed of the RIP, the transmission speed of data among a plurality of control modules, the speed of reading print data from a hard disk, computation speed of the control modules and the like. Provided in U.S. Patent US2006/0120787 A1, entitled "Image Processing In Printing System" is a solution of improving the processing speed of the RIP through parallel computations of a plurality of channels. This patent does not mention how to improve the transmission speed of data among a plurality of control modules, the speed of reading print data from a hard disk, the computation speed of the control modules and the like. Nor does the patent mention what kind of optimization could be achieved on the variable data printing, whereas variable data printing is one of the main functions of digital printers.

### Summary of the Invention

In view of the shortcomings in the prior art, an object of the present invention is to provide a distributed digital inkjet printing method and system supporting variable data, which are used for increasing the printing speed of digital printers.

To reach the above object, adopted in the present invention is the technical solution below: the distributed digital inkjet printing method supporting variable data comprises the following steps:
(1) performing, by an RIP server, RIP computation on a print file to obtain page data of a pane;
(2) transmitting, by the RIP server, the page data of the pane to a pane controller in a specified format;
(3) performing, by the pane controller, computation according to the page data to generate complete page print data upon receiving the page data;
(4) transmitting, by the pane controller, the complete page print data to a hardware control module of the pane corresponding to the pane controller; and
(5) printing, by the hardware control module of the pane corresponding to the pane controller, the page print data.

Further, the RIP server transmits the page data to the pane controller through a PCIe×4 data path or a 10Gbits network.

Further, for variable data printing, the RIP server splits the page data into reusable data and variable data.

Further, the RIP server performs compression computation on the reusable data and variable data before transmission.

Further, the pane controller performs decompression computation on received data to obtain the reusable data and the variable data, merges the reusable data and the variable data, performs computation to obtain the page print data, and transmits the page print data to the hardware control module of the pane corresponding to the pane controller.

Further, the pane controller temporarily stores received page data in a local hard disk, reads the page data from the local hard disk in a printing process, performs computation according to the page data to generate the page print data, and transmits the page print data to the hardware control module of the pane corresponding to the pane controller.

Further, another server is used as a system controller controlling workflow of the RIP server and the pane controller through Socket network communication.

A distributed digital inkjet printing system supporting variable data comprises a pane controller configured for a print pane, a hardware control module of a pane corresponding the pane controller to which the hardware control module is connected, and an RIP server connected with the pane controller, wherein:
the RIP server connected with the pane controller is configured to perform RIP computation on a print file to obtain page data of a pane and to transmit the page data of the pane to the pane controller in a specified format;
the pane controller configured for the print pane is configured to perform computation according to the page data to generate complete page print data upon receiving the page data, and to transmit the page print data to the hardware control module of the pane corresponding the pane controller; and
the hardware control module of the pane corresponding the pane controller is configured to print the page print data.

Further, the RIP server comprises a PCIe×4 data transmission module, and the pane controller comprises a PCIe×4 data reception module corresponding to the PCIe×4 data transmission module; and
the RIP server is further configured to transmit the page data of the pane to the pane controller through the PCIe×4 data transmission module, and the pane controller is further configured to receive the page data of the pane through the PCIe×4 data reception module.

Further, the page data is transmitted between the RIP server and the pane controller through a high-speed data path, and the high-speed data path comprises a 10Gbit network.

Further, the RIP server comprises a data splitting module configured to split the page data into reusable data and variable data, and the RIP server is further configured to transmit the reusable data only once and to transmit the variable data for each page data;
the pane controller comprises a data merging module configured to merge the reusable data and variable data into the complete page print data.

Further, the RIP server comprises a compression module configured to perform compression computation on the page data of the pane before transmission;
the pane controller comprises a decompression module, corresponding to the compression module, configured to perform decompression computation on the page data.

Further, the system further comprises another server as a system controller configured to control workflow of the RIP server and the pane controller through Socket network communication.

Still further, the system controller comprises a Socket module therein, the RIP server comprises a Socket module therein, the pane controller comprises a Socket module, and
the system further comprises a Switch configured to connect Socket modules, the system controller is further configured to acquire state information of the RIP server and the pane controller through Socket communication with the RIP server and the pane controller; to transmit a control command to the RIP server and the pane controller; and to enable a user to acquire working state of the system as a whole from the system controller to control the system as a whole.

The present invention has the effects that: by adopting the method and the system of the present invention, in the digital inkjet printing process of variable data printing, the speed of data transmission between control servers, the speed of reading data from a hard disk, and the speed of data computation and transmission for each pane hardware control module are all improved.

### Brief Description of the Drawings

Fig.1 is a flow diagram of a method provided in an embodiment of the present invention; and
Fig.2 is a structure diagram of a system provided in an embodiment of the present invention.

### Detailed Description of the Embodiments

The present invention will be further described in detail below in conjunction with the accompanying drawings and the embodiments.

Provided in the present invention is a distributed digital inkjet printing method and system supporting variable data.

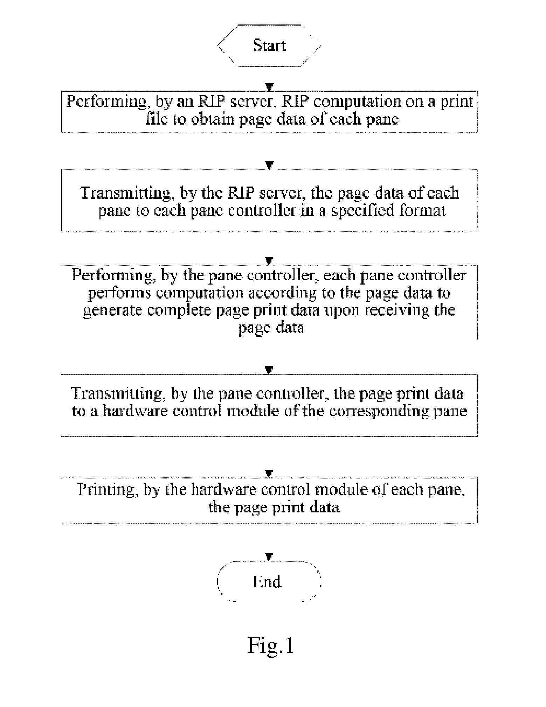

As shown in Fig.1, provided in an embodiment of the present invention is a distributed digital inkjet printing method supporting variable data, which comprises the steps:
(1) performing, by an RIP server, RIP computation on a print file to obtain page data of each pane;
(2) transmitting, by the RIP server, the page data of each pane to each pane controller in a specified format;
(3) performing, by the pane controller, each pane controller performs computation according to the page data to generate complete page print data upon receiving the page data;
(4) transmitting, by the pane controller, the page print data to a hardware control module of the corresponding pane; and
(5) printing, by the hardware control module of each pane, the page print data.

In this embodiment, the RIP server transmits the page data to each pane controller through a PCIe×4 data path or a 10Gbits network. For variable data printing, the RIP server splits the page data into reusable data and variable data. The RIP server performs compression computation on the data before data transmission. The pane controller performs decompression computation on the received data to obtain the reusable data and the variable data, merges the reusable data and the variable data and performs computation to obtain the page print data, and transmits the page print data to the hardware control module of the corresponding pane. The pane controller temporarily stores the received page data in a local hard disk, reads the page data from the local hard disk in the printing process, performs computation according to the page data to generate the page print data, and transmits the page print data to the hardware control module of the corresponding pane. Another server is used as a system controller, and the system controller controls the workflow of the RIP server and the pane controllers through Socket network communication.

Further, also provided in this embodiment can be a distributed digital inkjet printing system supporting variable data, and the system comprises a pane controller configured for each print pane, a hardware control module of the corresponding pane connected with each pane controller, and an RIP server connected with each pane controller, wherein:
the RIP server connected with each pane controller is used for performing RIP computation on a print file to obtain page data of each pane and transmitting the page data of each pane to each pane controller in a specified format;
the pane controller configured for each print pane is used for, after receiving the page data, performing computation according to the page data to generate complete page print data, and transmitting the page print data to the hardware control module of the corresponding pane; and
the hardware control module of each pane is used for printing the page print data.

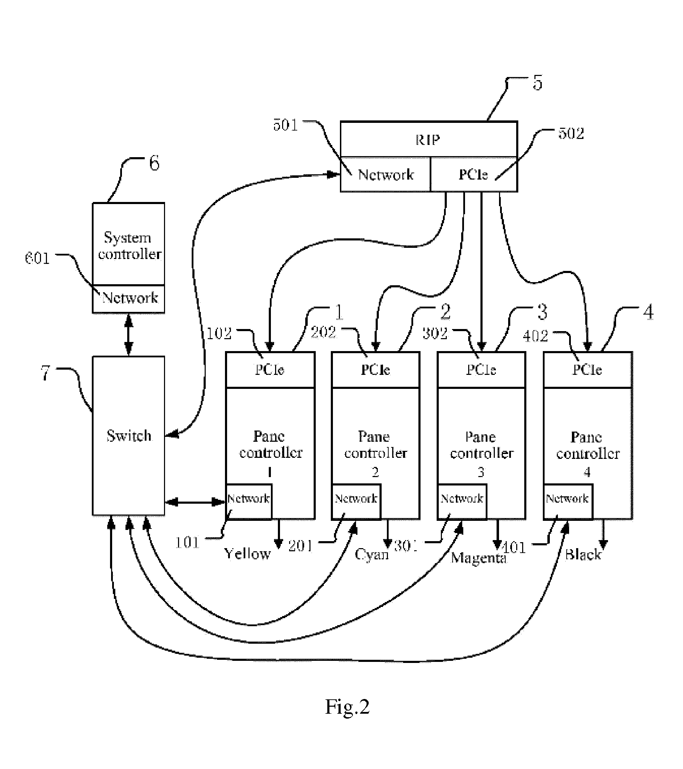

As shown in Fig.2, printing of a plurality of panes is probably needed at the same time in a digital printer. Take a four-color printer for example, four panes in the printer need to be printed: cyan, magenta, yellow and black. A server, known as pane controller, is configured for each pane (these pane controllers are identified as 1, 2, 3 and 4 in Fig.2, respectively). Each pane controller 1, 2, 3 or 4 is connected with a hardware control module of the corresponding pane, and is exclusively used for performing computation and transmitting the page print data for the pane. Interfaces between the pane controllers 1, 2, 3 and 4 and the hardware control modules are in conformity with the interface requirements of the pane hardware control modules. A server 5, known as an RIP server 5, performs RIP computation on the printed file. The RIP server 5 divides the raster print data of every page into four panes and transmits the page data of each pane to each pane controller 1, 2, 3 or 4, and each pane controller 1, 2, 3 or 4 transmits the computed corresponding page print data to the hardware control module of the corresponding pane.

To facilitate the RIP server 5 transmitting the page data to the pane controllers 1, 2, 3 and 4, a PCIe×4 data transmission module 502 for the RIP server 5 and PCIe×4 data reception modules 102, 202, 302 and 402 for the pane controllers 1, 2, 3 and 4 can be added. The RIP server 5 transmits the RIP-generated page data of the panes to the pane controllers 1, 2, 3 and 4 through the PCIe×4 data transmission module 502. The pane controllers 1, 2, 3 and 4 receive the page data of the panes through the PCIe×4 data reception modules 102, 202, 302 and 402. In addition to a PCIe×4 data path, transmission of the page data between the RIP server 5 and the pane controllers 1, 2, 3 and 4 can also be achieved through a high-speed data path, such as a 10Gbit network.

An important function of the digital printer is support variable data printing. In variable data printing, reusable data and variable data are included in the page data. The so called reusable data refers to print data that is used repeatedly in a plurality of different pages. The so called variable data refers to print data that is used individually in a certain page only. Obviously, in the RIP server 5 and the pane controllers 1, 2, 3 and 4, the reusable data only needs to be transmitted once, but as for the variable data that is exclusive in each page, transmission thereof is required for each page. Therefore, the RIP server 5 can split the page data into reusable data and variable data, and can transmit the reusable data only once and transmit the variable data for each page. In this way, the data transmission amount between the RIP server 5 and the pane controllers 1, 2, 3 and 4 can be effectively reduced. Specifically, splitting of the page data into the reusable data and the variable data can be implemented by a data splitting module arranged in the RIP server. In this case, a data merging module can be arranged in each pane controller, and the data merging module is used for merging the received reusable data and variable data into the complete page data.

To reduce the data transmission amount between the RIP server 5 and the pane controllers 1, 2, 3 and 4, the RIP server 5 can also perform compression computation on the data before data transmission and transmit the compressed data to the pane controllers 1, 2, 3 and 4. Specifically, the RIP server performing compression computation on the data before data transmission can be implemented by a compression module arranged in the RIP server 5. In this case, each pane controller can be provided with a corresponding decompression module, and the decompression module is used for performing decompression computation on the received data.

The pane controllers 1, 2, 3 and 4 perform decompression computation on the received data, merge the received reusable data and variable data into complete page data, generate page print data according to the page data and transmit the page print data to the hardware control modules of the panes. The pane controllers 1, 2, 3 and 4 can also store the received non-decompressed data in a local hard disk of the server. When printing is needed, compression data can be read from the local hard disk and then decompressed, and after the reusable data and the variable data are merged into the complete page data, the page print data is generated according to the page data and transmitted to the hardware control module of each pane. The print data is split into the variable data and the usable data and the resulting data is compressed and stored, thereby greatly reducing the data storage amount. The data reading time can be reduced effectively relative to reading of the whole page of rasterized data from the hard disk.

Effective management and control on data transmission and printing flow can be accomplished through a server, known as system controller 6. The system controller 6 comprises a Socket module 601 therein, the RIP server comprises a Socket module 501 therein, and each pane controller comprises a Socket module 101, 201, 301 or 401. A Switch 7 is additionally arranged for connecting the Socket modules of the servers. The system controller 6 acquires the state information of the servers through Socket communication with the RIP server 5 and the pane controllers 1, 2, 3 and 4 and transmits a control command to the servers. Meanwhile, a user can also acquire the working state of the entire system from the system controller 6 and control the entire system.

Provided in the embodiments of the present invention are a distributed digital inkjet printing method and system supporting variable data. It shall be understood by those skilled in the art that the embodiments of this application may be provided as a method, a system, or a computer program product. Thus, this application can be provided in the form of a full hardware embodiment, a full software embodiment or an embodiment combining software and hardware. Furthermore, this application may be in the form of a computer program product implemented on one or more computer-readable storage media (including, but not limited to disk memory, CD-ROM, optical memory, etc.) with computer-readable program codes contained therein.

This application has been described with reference to the flow diagram and/or block diagram of the method, the equipment (system) and the computer program product in accordance with the embodiments of this application. It shall be understood that every flow and/or block in the flow diagram and/or block diagram as well as a combination of the flows and/or blocks in the flow diagram and/or block diagram can be implemented by computer program instructions. These computer program instructions may be provided to a general-purpose computer, a special-purpose computer, an embedded processor or a processor of other programmable data processing equipment to produce a machine, so that a device for implementing the functions specified in one or more flows of the flow diagram and/or one or more blocks of the block diagram is produced through the instructions executed by the computers or the processor of other programmable data processing equipment.

These computer program instructions may also be stored in a computer-readable memory capable of causing computers or other programmable data processing equipment to work in a specific way, so that through the instructions stored in the computer-readable memory, a manufactured product including an instruction device is produced, the instruction device being used for implementing the functions specified in one or more flows of the flow diagram and/or one or more blocks of the block diagram.

These computer program instructions may also be loaded on computers or other programmable data processing equipment, so that a series of operating steps are executed on the computers or other programmable equipment to generate computer-implemented processing, thus providing steps for implementing the functions specified in one or more flows of the flow diagram and/or one or more blocks of the block diagram through the instructions executed on the computers or other programmable equipment.

Although the preferred embodiments of the present application have been described, other changes and modifications could be made to these embodiments by those skilled in the art once they get the basic creative concept. Accordingly, the appended claims are intended to be interpreted as covering the preferred embodiments and all the changes and modifications falling within the scope of this application.

Obviously, various modifications and variations could be made to this application by those skilled in the art without departing from the spirit and scope of this application. Thus, provided that these modifications and variations made to this application are within the scope of the claims of this application and equivalent technologies thereof, this application is intended to cover these modifications and variations.

## Claims

1. A distributed digital inkjet printing method supporting variable data, comprising:
(1) performing, by an RIP server, RIP computation on a print file to obtain page data of a pane;
(2) transmitting, by the RIP server, the page data of the pane to a pane controller in a specified format;
(3) performing, by the pane controller, computation according to the page data to generate complete page print data upon receiving the page data;
(4) transmitting, by the pane controller, the complete page print data to a hardware control module of the pane corresponding to the pane controller; and
(5) printing, by the hardware control module of the pane corresponding to the pane controller, the page print data.

2. The method according to claim 1, wherein the RIP server transmits the page data to the pane controller through a PCIe×4 data path or a 10Gbits network.

3. The method according to claim 1, wherein the RIP server splits the page data into reusable data and variable data.

4. The method according to claim 3, wherein the RIP server performs compression computation on the reusable data and variable data before transmission.

5. The method according to claim 4, wherein the pane controller performs decompression computation on received data to obtain the reusable data and the variable data, merges the reusable data and the variable data, performs computation to obtain the page print data, and transmits the page print data to the hardware control module of the pane corresponding to the pane controller.

6. The method according to any of claims 1-5, wherein the pane controller temporarily stores received page data in a local hard disk, reads the page data from the local hard disk in a printing process, performs computation according to the page data to generate the page print data, and transmits the page print data to the hardware control module of the pane corresponding to the pane controller.

7. The method according to any of claims 1-5, wherein another server is used as a system controller controlling workflow of the RIP server and the pane controller through Socket network communication.

8. A distributed digital inkjet printing system supporting variable data, comprising a pane controller configured for a print pane, a hardware control module of a pane corresponding the pane controller to which the hardware control module is connected, and an RIP server connected with the pane controller, wherein:
the RIP server connected with the pane controller is configured to perform RIP computation on a print file to obtain page data of a pane and to transmit the page data of the pane to the pane controller in a specified format;
the pane controller configured for the print pane is configured to perform computation according to the page data to generate complete page print data upon receiving the page data, and to transmit the page print data to the hardware control module of the pane corresponding the pane controller; and
the hardware control module of the pane corresponding the pane controller is configured to print the page print data.

9. The system according to claim 8, wherein the RIP server comprises a PCIe×4 data transmission module, and the pane controller comprises a PCIe×4 data reception module corresponding to the PCIe×4 data transmission module; and
the RIP server is further configured to transmit the page data of the pane to the pane controller through the PCIe×4 data transmission module, and the pane controller is further configured to receive the page data of the pane through the PCIe×4 data reception module.

10. The system according to claim 8, wherein the page data is transmitted between the RIP server and the pane controller through a high-speed data path, and the high-speed data path comprises a 10Gbit network.

11. The system according to claim 8, wherein the RIP server comprises a data splitting module configured to split the page data into reusable data and variable data, and the RIP server is further configured to transmit the reusable data only once and to transmit the variable data for each page data;
the pane controller comprises a data merging module configured to merge the reusable data and variable data into the complete page print data.

12. The system according to claim 8, wherein the RIP server comprises a compression module configured to perform compression computation on the page data of the pane before transmission;
the pane controller comprises a decompression module, corresponding to the compression module, configured to perform decompression computation on the page data.

13. The system according to any of claims 8 to 12, further comprising another server as a system controller configured to control workflow of the RIP server and the pane controller through Socket network communication.

14. The system according to claim 13, wherein the system controller comprises a Socket module therein, the RIP server comprises a Socket module therein, the pane controller comprises a Socket module, and
the system further comprises a Switch configured to connect Socket modules, the system controller is further configured to acquire state information of the RIP server and the pane controller through Socket communication with the RIP server and the pane controller; to transmit a control command to the RIP server and the pane controller; and to enable a user to acquire working state of the system as a whole from the system controller to control the system as a whole.
